# EUROPEAN PATENT SPECIFICATION

(11) **EP 3 747 672 B1**
(45) Date of publication and mention of the grant of the patent: **24.05.2023**
(21) Application number: 20172902.7
(22) Date of filing: 05.05.2020
(51) Int. Cl.: B60C 11/03

(54) **TIRE TREAD**
REIFENLAUFFLÄCHE
BANDE DE ROULEMENT DE PNEUMATIQUE

(30) Priority: 05.06.2019 JP 2019105570; 13.12.2019 JP 2019225755
(43) Date of publication of application: 09.12.2020
(73) Proprietor: Sumitomo Rubber Industries, Ltd., Kobe-shi, Hyogo-ken 651-0072 (JP)
(72) Inventor: MIKI, Toshihiro, Kobe-shi, Hyogo-ken, 651-0072 (JP)
(74) Representative: Manitz Finsterwald Patent- und Rechtsanwaltspartnerschaft mbB

(56) References cited:
- EP-A1- 3 025 875
- EP-A1- 3 450 209
- WO-A1-2012/073420
- KR-A- 20170 032 829
- US-A1- 2007 000 590

## Description

### BACKGROUND OF THE INVENTION

### Field of the Invention

The present invention relates to a tire and specifically relates to a tire including a tread portion having a designated mounting direction to a vehicle.

### Description of the Background Art

Japanese Laid-Open Patent Publication No. 2017-56782 proposes a tire including a tread portion having a designated mounting direction to a vehicle. For the tire, improvement of wet performance, wear resistance, and steering stability is expected by specifying arrangement of grooves.

With enhancement of the performance of vehicles, recent tires have been required to have improved steering stability on a dry road surface and a wet road surface. Particularly, tires used for running in a competition such as gymkhana are required to have higher performance on both a dry road surface and a wet road surface. Meanwhile, for example, when a groove volume is decreased to increase the stiffness of a tread portion in order to improve steering stability, wet performance tends to be deteriorated. Thus, tires capable of exhibiting steering stability on a dry road surface while ensuring wet performance are desired.

A tire according to the preamble of claim 1 is known from WO 2012/073420 A1. Related tires are known from EP 3 450 209 A1, EP 3 025 875 A1 and US 2007/000590 A1.

### SUMMARY OF THE INVENTION

The present invention has been made in view of the above-described problem, and a main object of the present invention is to be able to further improve steering stability on a dry road surface, while ensuring wet performance, in a tire including a tread portion having a designated mounting direction to a vehicle.

A first aspect of the present invention provides a tire including a tread portion having a designated mounting direction to a vehicle, wherein the tread portion includes: an inner tread edge located at an inner side of the vehicle when the tire is mounted on the vehicle; an outer tread edge located at an outer side of the vehicle when the tire is mounted on the vehicle; a first main groove continuously extending in a tire circumferential direction in a zigzag manner; a second main groove continuously extending in the tire circumferential direction in a zigzag manner between the inner tread edge and the first main groove; and an outer land portion between the outer tread edge and the first main groove, at least a part of a groove center line of the first main groove is located at the inner tread edge side with respect to a tire equator, the outer land portion has a plurality of outer lateral grooves extending in a tire axial direction and has no groove continuously extending in the tire circumferential direction, and an inner end in the tire axial direction of each outer lateral groove terminates without communicating with the first main groove.

In the tire according to the present invention, the groove center line of the first main groove is preferably located at the inner tread edge side with respect to the tire equator.

In the tire according to the present invention, preferably, the groove center line of the first main groove includes a plurality of zigzag peaks, and the inner ends of the outer lateral grooves are spaced apart from the zigzag peaks in the tire circumferential direction.

In the tire according to the present invention, the outer lateral grooves preferably include a first outer lateral groove extending to the outer tread edge.

In the tire according to the present invention, the outer lateral grooves include a second outer lateral groove terminating at the tire equator side with respect to the outer tread edge.

In the tire according to the present invention, each outer lateral groove preferably has a groove width gradually decreasing toward the outer tread edge side.

In the tire according to the present invention, each outer lateral groove preferably has a depth gradually decreasing toward the outer tread edge side.

In the tire according to the present invention, preferably, the tread portion includes an intermediate land portion between the first main groove and the second main groove, and the intermediate land portion has a width in the tire axial direction larger than a sum of a groove width of the first main groove and a groove width of the second main groove.

In the tire according to the present invention, preferably, the tread portion includes an inner land portion between the inner tread edge and the second main groove, the inner land portion has a plurality of inner lateral grooves extending in the tire axial direction, and an inner end in the tire axial direction of each inner lateral groove terminates without communicating with the second main groove.

In the tire according to the present invention, each inner lateral groove preferably extends to the inner tread edge.

In the tire according to the present invention, preferably, a groove center line of the second main groove includes a plurality of zigzag peaks, and ends at the second main groove side of the inner lateral grooves are spaced apart from the zigzag peaks in the tire circumferential direction.

In the tire according to the present invention, each of all grooves provided on the tread portion preferably includes a groove wall main body extending outwardly in a tire radial direction from a groove bottom portion thereof, and a chamfered portion connected to the groove wall main body and inclined at a larger angle relative to the tire radial direction than the groove wall main body.

In the tire according to the present invention, preferably, the tread portion includes an outer region between the outer tread edge and the tire equator, and an inner region between the inner tread edge and the tire equator, and a land ratio of the outer region is larger than a land ratio of the inner region.

A second aspect of the present invention provides a tire including a tread portion having a designated mounting direction to a vehicle, wherein the tread portion includes: an inner tread edge located at an inner side of the vehicle when the tire is mounted on the vehicle; an outer tread edge located at an outer side of the vehicle when the tire is mounted on the vehicle; a first main groove continuously extending in a tire circumferential direction in a zigzag manner; a second main groove continuously extending in the tire circumferential direction in a zigzag manner between the inner tread edge and the first main groove; and an outer land portion between the outer tread edge and the first main groove, at least a part of a groove center line of the first main groove is located at the inner tread edge side with respect to a tire equator, the outer land portion has a plurality of outer lateral grooves extending in a tire axial direction and has no main groove having a groove width equal to or greater than 5 mm and continuously extending in the tire circumferential direction, an inner end in the tire axial direction of each outer lateral groove terminates without communicating with the first main groove, and the outer lateral grooves include a second outer lateral groove terminating at the tire equator side with respect to the outer tread edge.

The tread portion of the tire according to the present invention includes a first main groove continuously extending in the tire circumferential direction in a zigzag manner, a second main groove continuously extending in the tire circumferential direction in a zigzag manner between the inner tread edge and the first main groove, and an outer land portion between the outer tread edge and the first main groove.

The first main groove and the second main groove, which are two main grooves extending in a zigzag manner, can provide frictional force in the tire circumferential direction on both a dry road surface and a wet road surface by the edges of these grooves while maintaining sufficient drainage performance. In addition, each land portion demarcated by the first main groove and the second main groove is less likely to fall down in the tire axial direction during cornering as compared to land portions demarcated by straight main grooves, and thus serves to enhance steering stability on a dry road surface.

In the tire according to the present invention, the outer land portion on which great contact pressure tends to act during cornering has a plurality of outer lateral grooves extending in the tire axial direction but has no groove continuously extending in the tire circumferential direction. In addition, the outer land portion of the tire according to the second aspect of the present invention has no main groove having a groove width equal to or greater than 5 mm and continuously extending in the tire circumferential direction. Accordingly, the stiffness in the tire axial direction of the outer land portion is increased, so that steering stability on a dry road surface is improved. Moreover, wet performance is ensured by the outer lateral grooves.

In the tire according to the present invention, since the inner end in the tire axial direction of each outer lateral groove terminates without communicating with the first main groove, the stiffness of the outer land portion is further increased, so that steering stability on a dry road surface is further improved.

### BRIEF DESCRIPTION OF THE DRAWINGS

FIG. 1 is a development of a tread portion of a tire according to an embodiment of a first aspect of the present invention;
FIG. 2 is an enlarged view of an outer land portion in FIG. 1;
FIG. 3 is an enlarged view of an intermediate land portion and an inner land portion in FIG. 1;
FIG. 4 is a transverse cross-sectional view of a first main groove in FIG. 1;
FIG. 5 is a development of a tread portion of a tire according to an embodiment of a second aspect of the present invention; and
FIG. 6 is a development of a tread portion of a tire of a comparative example.

### DESCRIPTION OF THE PREFERRED EMBODIMENTS

Hereinafter, an embodiment of the first aspect of the present invention will be described with reference to the drawings.

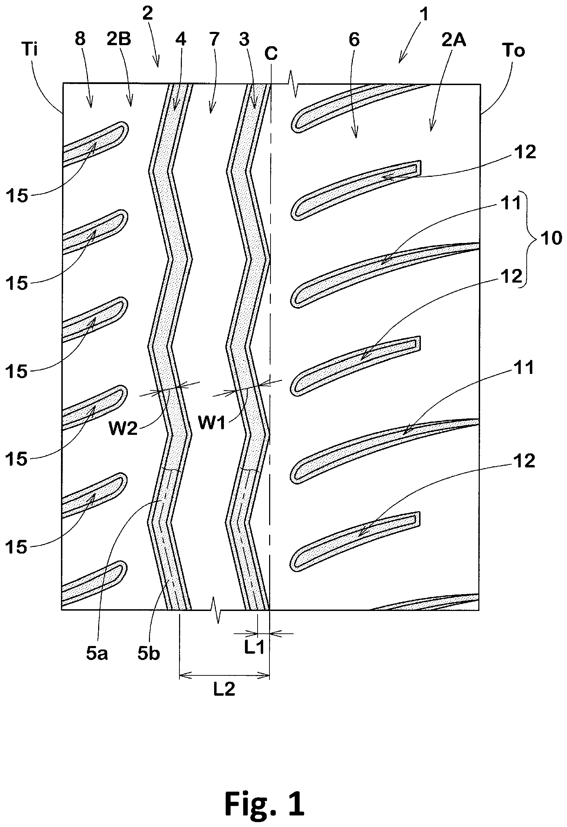

FIG. 1 shows a development of a tread portion 2 of a tire 1 according to the present embodiment. The tire 1 according to the present embodiment is, for example, configured as a pneumatic tire for a passenger car, and is suitably used particularly in gymkhana.

As shown in FIG. 1, the tire 1 according to the present invention has a designated mounting direction to a vehicle. The mounting direction to a vehicle is indicated, for example, on a sidewall portion (not shown) of the tire 1 by characters, a pictogram, or the like. When the tire 1 is mounted to a vehicle, the left side in FIG. 1 corresponds to the inner side of the vehicle, and the right side in FIG. 1 corresponds to the outer side of the vehicle.

Since the mounting direction to a vehicle is designated, an inner tread edge Ti located at the inner side of the vehicle when the tire 1 is mounted on a vehicle and an outer tread edge To located at the outer side of the vehicle when the tire 1 is mounted on the vehicle are defined in the tread portion 2. The tread portion 2 includes an outer region 2A between a tire equator C and the outer tread edge To, and an inner region 2B between the tire equator C and the inner tread edge Ti

In the case of a pneumatic tire, each of the inner tread edge Ti and the outer tread edge To is a ground contact position at the outermost side in the tire axial direction when a normal load is applied to the tire 1 in a normal state and the tire 1 is brought into contact with a flat surface at a camber angle of 0°. The normal state is a state where the tire is mounted to a normal rim and inflated to a normal internal pressure and no load is applied to the tire. In the present specification, unless otherwise specified, dimensions and the like of components of the tire are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tread portion 2 includes a first main groove 3 continuously extending in the tire circumferential direction in a zigzag manner, and a second main groove 4 continuously extending in the tire circumferential direction in a zigzag manner between the inner tread edge Ti and the first main groove 3. Accordingly, the tread portion 2 includes an outer land portion 6 between the outer tread edge To and the first main groove 3, an intermediate land portion 7 between the first main groove 3 and the second main groove 4, and an inner land portion 8 between the inner tread edge Ti and the second main groove 4. In each drawing of the present specification, each groove is colored for easy understanding of the invention.

In a preferred mode, each main groove has a groove width not less than 5 mm and more preferably not less than 6 mm. In addition, each of the groove width W1 of the first main groove 3 and the groove width W2 of the second main groove 4 is, for example, 4.0% to 7.0% of a tread width TW. Each of the depth of the first main groove 3 and the depth of the second main groove 4 is, for example, 5 to 10 mm. The tread width TW is the distance in the tire axial direction from the inner tread edge Ti to the outer tread edge To in the normal state.

At least a part of a groove center line of the first main groove 3 is located at the inner tread edge Ti side with respect to the tire equator C. Preferably 50% or more and more preferably 80% or more of the groove center line of the first main groove 3 is located at the inner tread edge Ti side with respect to the tire equator C. As a further preferable mode, in the present embodiment, the entirety of the groove center line of the first main groove 3 is located at the inner tread edge Ti side with respect to the tire equator C. Accordingly, a large ground-contact surface of the outer land portion 6 is ensured, so that steering stability on a dry road surface is improved.

At least a part of the first main groove 3 is preferably provided on the tire equator C. For example, the zigzag peaks of the edge, at the outer tread edge To side, of the first main groove 3 of the present embodiment are located on the tire equator C. The distance L1 in the tire axial direction between the tire equator C and the groove center line of the first main groove 3 is, for example, preferably 0.03 to 0.10 times the tread width TW.

At least a part of the second main groove 4, for example, preferably intersects the center position in the tire axial direction of the inner region 2B. The distance L2 in the tire axial direction between the tire equator C and a groove center line of the second main groove 4 is, for example, 0.20 to 0.30 times the tread width TW. Accordingly, wet performance is ensured.

Each of the first main groove 3 and the second main groove 4 includes first inclined portions 5a and second inclined portions 5b that are inclined in opposite directions relative to the tire circumferential direction and that are alternately arranged in the tire circumferential direction. The angles of the first inclined portions 5a and the second inclined portions 5b relative to the tire circumferential direction are, for example, 10 to 20°.

The first main groove 3 and the second main groove 4 extend in a zigzag manner at pitches equal to each other. As a more preferable mode, in the present embodiment, the first main groove 3 and the second main groove 4 extend in a zigzag manner at the same phase. Accordingly, uneven wear of the tread portion 2 is inhibited. However, the first main groove 3 and the second main groove 4 may extend in a zigzag manner at phases opposite to each other.

The first main groove 3 and the second main groove 4, which are two main grooves extending in a zigzag manner, can provide frictional force in the tire circumferential direction on both a dry road surface and a wet road surface by the edges of these grooves while maintaining sufficient drainage performance. In addition, each land portion demarcated by the first main groove 3 and the second main groove 4 is less likely to fall down in the tire axial direction during cornering as compared to land portions demarcated by straight main grooves, and thus serves to enhance steering stability on a dry road surface.

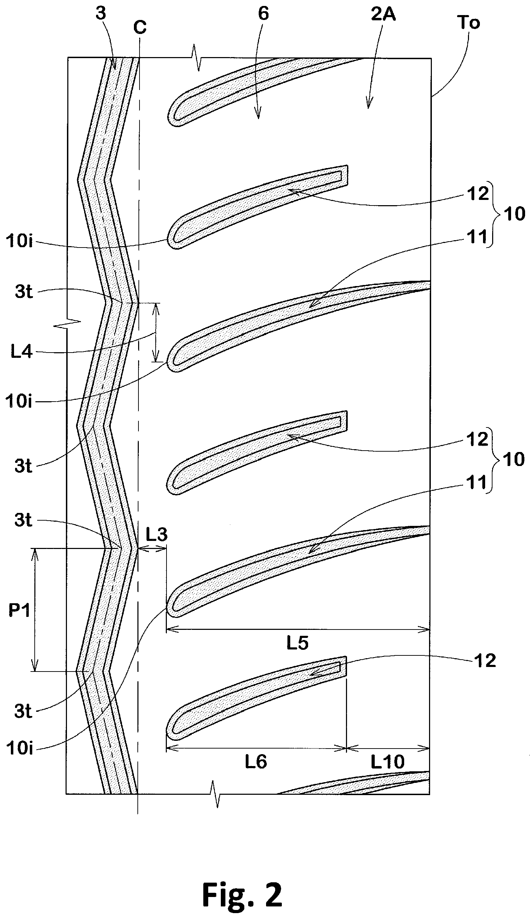

FIG. 2 shows an enlarged view of the outer land portion 6. As shown in FIG. 2, the outer land portion 6 has a plurality of outer lateral grooves 10 extending in the tire axial direction, and has no groove continuously extending in the tire circumferential direction. In addition, an outer land portion 6 of a tire according to a second embodiment of the present invention has no main groove having a groove width equal to or greater than 5 mm and continuously extending in the tire circumferential direction. Accordingly, the stiffness of the outer land portion 6 in the tire axial direction is increased, so that steering stability on a dry road surface is improved. Moreover, wet performance is ensured by the outer lateral grooves 10.

An inner end 10i in the tire axial direction of each outer lateral groove 10 terminates without communicating with the first main groove 3. Accordingly, the stiffness of the outer land portion 6 is further increased, so that steering stability on a dry road surface is further improved.

The positions in the tire axial direction of the inner ends 10i of the respective outer lateral grooves 10 of the present embodiment coincide with each other. The minimum distance L3 in the tire axial direction from the inner end 10i of each outer lateral groove 10 to the edge of the first main groove 3 is, for example, preferably 0.05 to 0.15 times the tread width TW (shown in FIG. 1, and the same applies below) and more preferably 0.05 to 0.10 times the tread width TW. The arrangement of such outer lateral grooves 10 improves wet performance and steering stability on a dry road surface in a well-balanced manner.

The inner end 10i of each outer lateral groove 10 is spaced apart from a zigzag peak 3t of the groove center line of the first main groove 3 in the tire circumferential direction. The distance L4 in the tire circumferential direction between the inner end 10i of the outer lateral groove 10 and the zigzag peak 3t is 0.30 to 0.50 times a pitch length P1 of the zigzag of the first main groove 3. Accordingly, uneven wear of the tread portion 2 is inhibited. The pitch length P1 corresponds to the distance in the tire circumferential direction from one zigzag peak 3t to a zigzag peak 3t adjacent thereto.

Each outer lateral groove 10 is preferably provided, for example, at an angle of 0 to 30° relative to the tire axial direction. Accordingly, the stiffness in the tire axial direction of the outer land portion 6 is maintained, so that cornering performance on a dry road surface is improved.

The groove width of each outer lateral groove 10 is preferably smaller than the groove width W1 (shown in FIG. 1) of the first main groove 3. In addition, the depth of each outer lateral groove 10 is preferably smaller than the depth of the first main groove 3. Accordingly, the stiffness of the outer land portion 6 is maintained, so that steering stability on a dry road surface is improved.

Each outer lateral groove 10 preferably has, for example, a groove width gradually decreasing toward the outer tread edge To side. For one outer lateral groove 10, the minimum groove width thereof is preferably 0.20 to 0.60 times the maximum groove width thereof. Accordingly, the stiffness of the outer land portion 6 increases toward the outer tread edge To side. As a result, the steering response during cornering becomes linear, so that excellent steering stability is achieved.

From the same viewpoint, each outer lateral groove 10 preferably has, for example, a depth gradually decreasing toward the outer tread edge To side. For one outer lateral groove 10, the minimum depth thereof is preferably 0.20 to 0.60 times the maximum depth thereof.

Each outer lateral groove 10 of the present embodiment crosses the center position in the tire axial direction of the outer region 2A. In addition, the portion, of the outer lateral groove 10, having the maximum groove width and the maximum depth is located at the tire equator C side with respect to the center position. Moreover, the portion, of the outer lateral groove 10, having the minimum groove width and the minimum depth is located at the outer tread edge To side with respect to the center position. Accordingly, wet performance and steering stability on a dry road surface are improved in a well-balanced manner.

The outer lateral grooves 10 include first outer lateral grooves 11 extending to the outer tread edge To, and second outer lateral grooves 12 terminating at the tire equator C side with respect to the outer tread edge To. Accordingly, the stiffness in the vicinity of the outer tread edge To is maintained, so that excellent steering stability is achieved particularly in gymkhana.

In order to improve steering stability on a dry road surface while ensuring wet performance, the length L5 in the tire axial direction of each first outer lateral groove 11 is, for example, preferably 0.30 to 0.45 times the tread width TW. The length L6 in the tire axial direction of each second outer lateral groove 12 is preferably 0.60 to 0.75 times the length L5 of each first outer lateral groove 11.

The distance L10 in the tire axial direction from the outer tread edge To to each second outer lateral groove 12 is preferably larger than the minimum distance L3 in the tire axial direction from the inner end 10i of each outer lateral groove 10 to the edge of the first main groove 3. Specifically, the distance L10 is preferably 2.5 to 3.5 times the distance L3. Owing to the arrangement of such second outer lateral grooves 12, the steering response during sharp cornering becomes further linear.

The outer land portion 6 of the present embodiment does not have any drainage elements, such as grooves and sipes, other than the above-described outer lateral grooves 10. Accordingly, the stiffness of the outer land portion 6 is maintained at a high level, so that steering stability on a dry road surface is improved. In the present specification, a sipe refers to a slit having a width not greater than 1.5 mm, and a groove has a larger width than a sipe.

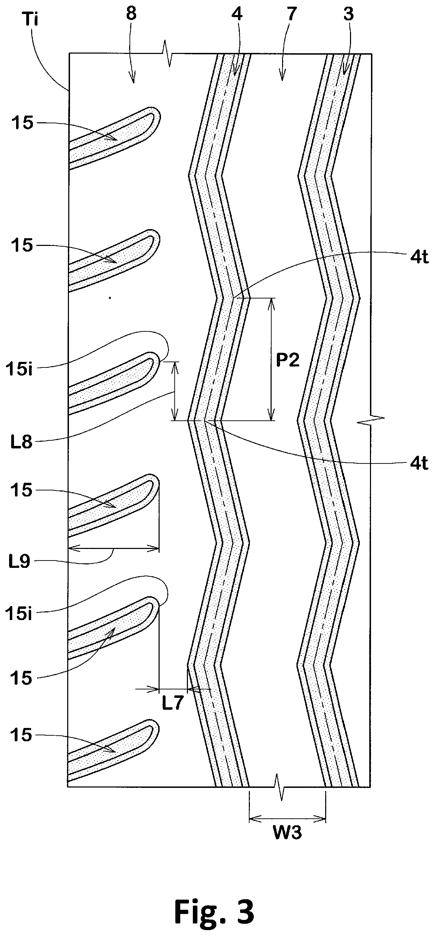

FIG. 3 shows an enlarged view of the intermediate land portion 7 and the inner land portion 8. As shown in FIG. 3, the intermediate land portion 7 does not have any drainage elements such as grooves and sipes. Such an intermediate land portion 7 has high stiffness and serves to enhance steering stability.

The width W3 in the tire axial direction of the intermediate land portion 7 is, for example, 0.10 to 0.25 times the tread width TW. In a preferable mode, the width W3 of the intermediate land portion 7 is preferably larger than the sum of the groove width of the first main groove 3 and the groove width of the second main groove 4.

Moreover, the width W3 of the intermediate land portion 7 is preferably smaller than the distance in the tire circumferential direction between the inner end of the first outer lateral groove 11 and the inner end of the second outer lateral groove 12 (shown in FIG. 2). Accordingly, the stiffness in the tire axial direction of the intermediate land portion 7 is lower than the stiffness in the tire circumferential direction of a land portion piece between the first outer lateral groove 11 and the second outer lateral groove 12. Therefore, while traction performance and braking performance are maintained, lightness of steering during cornering is improved, so that excellent initial cornering performance is achieved particularly in gymkhana.

The inner land portion 8 has a plurality of inner lateral grooves 15 extending in the tire axial direction. Each inner lateral groove 15 is provided, for example, at an angle of 0 to 30° relative to the tire axial direction. Each inner lateral groove 15 of the present embodiment is inclined in the same direction as each outer lateral groove 10.

An inner end 15i in the tire axial direction of each inner lateral groove 15 terminates without communicating with the second main groove 4. Accordingly, the stiffness of the inner land portion 8 is maintained, so that steering stability on a dry road surface is improved.

The positions in the tire axial direction of the inner ends 15i of the respective inner lateral grooves 15 of the present embodiment coincide with each other. The minimum distance L7 in the tire axial direction from the inner end 15i of each inner lateral groove 15 to the edge of the second main groove 4 is, for example, 0.05 to 0.15 times the tread width TW. The arrangement of such inner lateral grooves 15 improves wet performance and steering stability on a dry road surface in a well-balanced manner.

The length L9 in the tire axial direction of each inner lateral groove 15 is, for example, preferably smaller than the length L5 in the tire axial direction of each first outer lateral groove 11. The length L9 of each inner lateral groove 15 is preferably smaller than the length L6 in the tire axial direction of each second outer lateral groove 12. Specifically, the length L9 of each inner lateral groove 15 is 0.10 to 0.20 times the tread width TW.

The inner end 15i of each inner lateral groove 15 is spaced apart from a zigzag peak 4t of a groove center line of the second main groove 4 in the tire circumferential direction. The distance L8 in the tire circumferential direction between the inner end 15i of the inner lateral groove 15 and the zigzag peak 4t is 0.30 to 0.50 times a pitch length P2 of the zigzag of the second main groove 4. The arrangement of such inner lateral grooves 15 maintains the stiffness of the tread portion 2 and serves to enhance steering stability on a dry road surface.

Each inner lateral groove 15 preferably extends to the inner tread edge Ti. Such an inner lateral groove 15 can exhibit excellent drainage performance.

The groove width of each inner lateral groove 15 is preferably smaller than the groove width W2 (shown in FIG. 1) of the second main groove 4. In addition, the depth of each inner lateral groove 15 is preferably smaller than the depth of the second main groove 4. Accordingly, the stiffness of the inner land portion 8 is maintained, so that steering stability on a dry road surface is improved.

Each inner lateral groove 15 preferably has, for example, a groove width gradually decreasing toward the inner tread edge Ti side. Similarly, each inner lateral groove 15 preferably has, for example, a depth gradually decreasing toward the inner tread edge Ti side. Accordingly, uneven wear in the vicinity of the inner tread edge Ti is inhibited.

The inner land portion 8 of the present embodiment does not have any drainage elements, such as grooves and sipes, other than the above-described inner lateral grooves 15. Accordingly, steering stability on a dry road surface is improved.

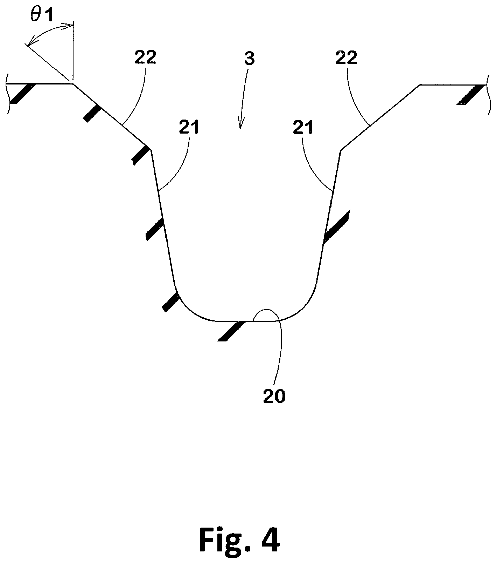

FIG. 4 shows a transverse cross-sectional view of the first main groove 3 as a diagram showing a cross-section of a groove provided on the tread portion 2. As shown in FIG. 4, in the present embodiment, each of all the grooves provided on the tread portion 2 includes groove wall main bodies 21 extending outwardly in the tire radial direction from a groove bottom portion 20, and chamfered portions 22 connected to the groove wall main bodies 21 and inclined at a larger angle relative to the tire radial direction than the groove wall main bodies 21. An angle θ1 of each chamfered portion 22 relative to a normal line passing through an edge of the groove is, for example, 45 to 80° and preferably 45 to 60°. Such a chamfered portion 22 can inhibit uneven wear of the edge of the groove. In addition, the chamfered portion 22 can be brought into contact with a road surface along fine irregularities of the road surface, and thus a substantial contact area of the tread surface of the tread portion 2 can be maintained.

When the respective grooves described above are adopted as shown in FIG. 1, the land ratio of the tread portion 2 is, for example, 70% to 85%. In a preferable mode, the land ratio of the outer region 2A is larger than the land ratio of the inner region 2B. Specifically, the land ratio of the outer region 2A is preferably 1.1 to 1.3 times the land ratio of the inner region 2B. Accordingly, the steering response during limit running becomes linear. In the present specification, the "land ratio" is a ratio of the area of the actual ground-contact surface to a virtual ground-contact surface obtained by filling all the grooves.

The hardness of a tread rubber that forms the tread portion 2 is, for example, 40 to 60 degrees. In the present specification, unless otherwise specified, the "hardness of a rubber" means a hardness measured with a type A durometer of JIS K6253 in an environment of a standard temperature of 25°C. In a more preferable mode, the hardness of the tread rubber is 35 to 50 degrees in an environment of 50±2°C. Accordingly, sufficient grip performance is exhibited in a state where the tire has been warmed to an appropriate temperature.

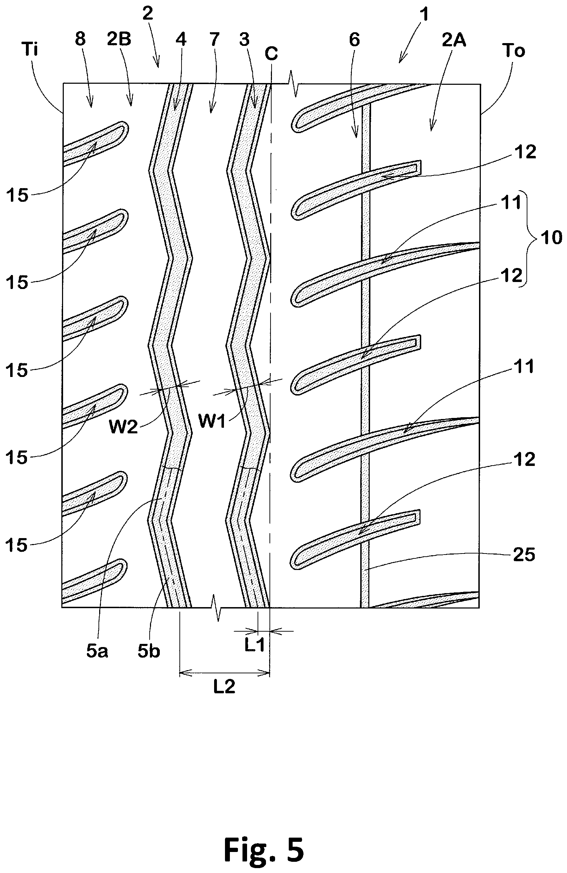

FIG. 5 shows a development of the tread portion 2 of the tire 1 according an embodiment of the second aspect of the present invention. In FIG. 5, elements that are common to the above-described embodiment are designated by the same reference characters, and the description thereof is omitted here. As shown in FIG. 5, the outer land portion 6 of the embodiment of the second aspect of the present invention has no main groove having a groove width equal to or greater than 5 mm and continuously extending in the tire circumferential direction, but may have a groove having a groove width less than 5 mm and continuously extending in the tire circumferential direction. The outer land portion 6 of this embodiment has a longitudinal narrow groove 25 having a groove width of 2 to 4 mm and continuously extending in the tire circumferential direction. The longitudinal narrow groove 25, for example, extends in a straight manner so as to intersect each outer lateral groove 10 and be parallel to the tire circumferential direction. However, the longitudinal narrow groove 25 is not limited to such a mode, and, for example, may extend in a wavy manner.

The depth of the longitudinal narrow groove 25 is, for example, smaller than the depth of the first main groove 3 and the depth of the second main groove 4. In a preferable mode, the depth of the longitudinal narrow groove 25 is smaller than the depth of each outer lateral groove 10. Such a longitudinal narrow groove 25 can enhance wet performance while inhibiting an excessive decrease in the stiffness of the outer land portion 6.

Although the tires according to the embodiments of the present invention have been described in detail above, the present invention is not limited to the above specific embodiments, and various modifications can be made to implement the present invention within the scope of the appended claims.

### EXAMPLES

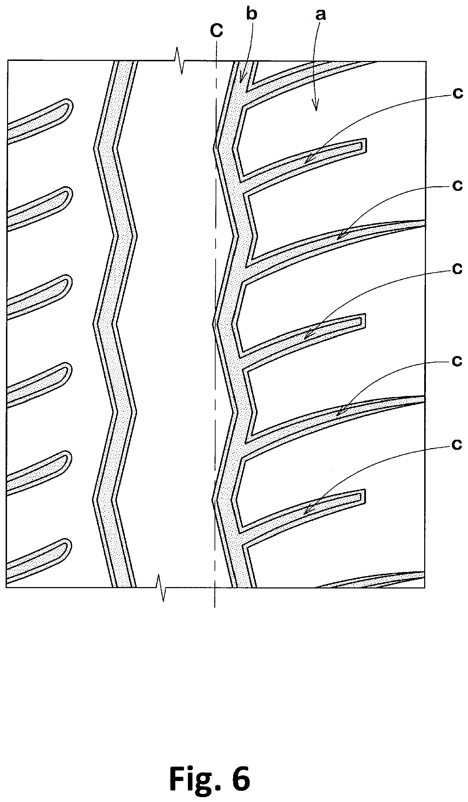

Pneumatic tires for gymkhana with a size of 225/45R17 having the basic tread pattern in FIG. 1 were produced as test tires on the basis of specifications in Table 1. As a comparative example, a tire, in which an outer region a has a first main groove b and outer lateral grooves c communicating with the first main groove b as shown in FIG. 6, was produced as a test tire. The tire of the comparative example is substantially the same as that in FIG. 1, except for the above points. Each test tire was tested for steering stability on a dry road surface and wet performance. The common specifications and the test methods for the respective test tires are as follows.
Rim: 17×8.5J
Tire internal pressure: 180 kPa
Test vehicle: a rear-wheel-drive car having an engine displacement of 2000 cc
Tire mounted position: all wheels

### <Steering Stability on Dry Road Surface>

Sensory evaluation was made by a driver for steering stability when the driver drove the above test vehicle in a gymkhana course with a dry road surface. The results are indicated as scores with the score of the comparative example being regarded as 100. A higher value indicates that the steering stability on the dry road surface is better.

### <Wet Performance>

Sensory evaluation was made by a driver for wet performance when the driver drove the above test vehicle on a wet general road. The results are indicated as scores with the score of the comparative example being regarded as 100. A higher value indicates that the wet performance is better.

**[Table 1]**

| | Comparative Example | Example 1 | Example 2 | Example 3 | Example 4 | Example 5 | Example 6 | Example 7 |
|---|---|---|---|---|---|---|---|---|
| Drawing showing tread pattern | FIG. 6 | FIG. 1 | FIG. 1 | FIG. 1 | FIG. 1 | FIG. 1 | FIG. 1 | FIG. 1 |
| Distance L3 from outer lateral groove to first main groove / tread width TW | - | 0.05 | 0.10 | 0.15 | 0.05 | 0.05 | 0.05 | 0.05 |
| Length L6 of second outer lateral groove / length L5 of first outer lateral groove | 0.68 | 0.68 | 0.68 | 0.68 | 0.60 | 0.65 | 0.70 | 0.75 |
| Steering stability on dry road surface (score) | 100 | 107 | 108 | 109 | 108 | 107 | 105 | 104 |
| Wet performance (score) | 100 | 100 | 100 | 97 | 98 | 100 | 100 | 101 |

As a result of the tests, it was confirmed that the tire of each Examples has improved steering stability on a dry road surface while ensuring wet performance.

## Claims

1. A tire (1) comprising a tread portion (2) having a designated mounting direction to a vehicle, wherein
the tread portion (2) includes
an inner tread edge (Ti) located at an inner side of the vehicle when the tire (1) is mounted on the vehicle,
an outer tread edge (To) located at an outer side of the vehicle when the tire (1) is mounted on the vehicle,
a first main groove (3) continuously extending in a tire circumferential direction in a zigzag manner,
a second main groove (4) continuously extending in the tire circumferential direction in a zigzag manner between the inner tread edge (Ti) and the first main groove (3), and
an outer land portion (6) between the outer tread edge (To) and the first main groove (3),
at least a part of a groove center line of the first main groove (3) is located at the inner tread edge (Ti) side with respect to a tire equator (C),
**characterized in that**
the outer land portion (6) comprises a plurality of outer lateral grooves (10) extending in a tire axial direction and has no groove continuously extending in the tire circumferential direction, and
an inner end (10i) in the tire axial direction of each outer lateral groove (10) terminates without communicating with the first main groove (3), and
the outer lateral grooves (10) include a second outer lateral groove (12) terminating at the tire equator (C) side with respect to the outer tread edge (To).

2. The tire (1) according to claim 1, wherein the groove center line of the first main groove (3) is located at the inner tread edge (Ti) side with respect to the tire equator (C).

3. The tire (1) according to claim 1 or 2, wherein
the groove center line of the first main groove (3) includes a plurality of zigzag peaks (3t), and
the inner ends (10i) of the outer lateral grooves (10) are spaced apart from the zigzag peaks (3t) in the tire circumferential direction.

4. The tire (1) according to any one of claims 1 to 3, wherein the outer lateral grooves (10) include a first outer lateral groove (11) extending to the outer tread edge (To).

5. The tire (1) according to any one of claims 1 to 4, wherein each outer lateral groove (10) has a groove width gradually decreasing toward the outer tread edge (To) side.

6. The tire (1) according to any one of claims 1 to 5, wherein each outer lateral groove (10) has a depth gradually decreasing toward the outer tread edge (To) side.

7. The tire (1) according to any one of claims 1 to 6, wherein
the tread portion (2) includes an intermediate land portion (7) between the first main groove (3) and the second main groove (4), and
the intermediate land portion (7) has a width in the tire axial direction larger than a sum of a groove width of the first main groove (3) and a groove width of the second main groove (4).

8. The tire (1) according to any one of claims 1 to 7, wherein
the tread portion (2) includes an inner land portion (8) between the inner tread edge (Ti) and the second main groove (4),
the inner land portion (8) comprises a plurality of inner lateral grooves (15) extending in the tire axial direction, and
an inner end (15i) in the tire axial direction of each inner lateral groove (15) terminates without communicating with the second main groove (4).

9. The tire (1) according to claim 8, wherein each inner lateral groove (15) extends to the inner tread edge (Ti).

10. The tire (1) according to claim 8 or 9, wherein
a groove center line of the second main groove (4) includes a plurality of zigzag peaks (4t), and
ends (15i) at the second main groove (4) side of the inner lateral grooves (15) are spaced apart from the zigzag peaks (4t) in the tire circumferential direction.

11. The tire (1) according to any one of claims 1 to 10, wherein each of all grooves provided on the tread portion (2) includes a groove wall main body (21) extending outwardly in a tire radial direction from a groove bottom portion (20) thereof, and a chamfered portion (22) connected to the groove wall main body (21) and inclined at a larger angle relative to the tire radial direction than the groove wall main body (21).

12. The tire (1) according to any one of claims 1 to 11, wherein
the tread portion (2) includes an outer region (2A) between the outer tread edge (To) and the tire equator (C), and an inner region (2B) between the inner tread edge (Ti) and the tire equator (C), and
a land ratio of the outer region (2A) is larger than a land ratio of the inner region (2B).

13. A tire (1) comprising a tread portion (2) having a designated mounting direction to a vehicle, wherein
the tread portion (2) includes
an inner tread edge (Ti) located at an inner side of the vehicle when the tire (1) is mounted on the vehicle,
an outer tread edge (To) located at an outer side of the vehicle when the tire (1) is mounted on the vehicle,
a first main groove (3) continuously extending in a tire circumferential direction in a zigzag manner,
a second main groove (4) continuously extending in the tire circumferential direction in a zigzag manner between the inner tread edge (Ti) and the first main groove (3), and
an outer land portion (6) between the outer tread edge (To) and the first main groove (3),
at least a part of a groove center line of the first main groove (3) is located at the inner tread edge (Ti) side with respect to a tire equator (C),
**characterized in that**
the outer land portion (6) comprises a plurality of outer lateral grooves (10) extending in a tire axial direction and has no main groove having a groove width equal to or greater than 5 mm and continuously extending in the tire circumferential direction, and
an inner end in the tire axial direction of each outer lateral groove (10) terminates without communicating with the first main groove (3), and
the outer lateral grooves (10) include a second outer lateral groove (12) terminating at the tire equator (C) side with respect to the outer tread edge (To).

## Patentansprüche

1. Reifen (1), der einen Laufflächenabschnitt (2) mit einer bestimmten Montagerichtung an einem Fahrzeug umfasst,
wobei der Laufflächenabschnitt (2) umfasst
eine innere Laufflächenkante (Ti), die an einer Innenseite des Fahrzeugs angeordnet ist, wenn der Reifen (1) an dem Fahrzeug montiert ist,
eine äußere Laufflächenkante (To), die an einer Außenseite des Fahrzeugs angeordnet ist, wenn der Reifen (1) an dem Fahrzeug montiert ist,
eine erste Hauptrille (3), die sich zickzackförmig kontinuierlich in einer Reifenumfangsrichtung erstreckt,
eine zweite Hauptrille (4), die sich zickzackförmig kontinuierlich in der Reifenumfangsrichtung zwischen der inneren Laufflächenkante (Ti) und der ersten Hauptrille (3) erstreckt, und
einen äußeren Landabschnitt (6) zwischen der äußeren Laufflächenkante (To) und der ersten Hauptrille (3),
wobei zumindest ein Teil einer Rillenmittellinie der ersten Hauptrille (3) auf der Seite der inneren Laufflächenkante (Ti) in Bezug auf den Reifenäquator (C) angeordnet ist,
**dadurch gekennzeichnet, dass**
der äußere Landabschnitt (6) eine Vielzahl von äußeren Querrillen (10) umfasst, die sich in einer Reifenaxialrichtung erstrecken, und keine Rille aufweist, die sich kontinuierlich in der Reifenumfangsrichtung erstreckt, und
ein inneres Ende (10i) in der Reifenaxialrichtung jeder äußeren Querrille (10) endet, ohne mit der ersten Hauptrille (3) in Verbindung zu stehen, und
die äußeren Querrillen (10) eine zweite äußere Querrille (12) umfassen, die auf der Seite des Reifenäquators (C) in Bezug auf die äußere Laufflächenkante (To) endet.

2. Reifen (1) nach Anspruch 1, wobei die Rillenmittellinie der ersten Hauptrille (3) auf der Seite der inneren Laufflächenkante (Ti) in Bezug auf den Reifenäquator (C) angeordnet ist.

3. Reifen (1) nach Anspruch 1 oder 2, wobei
die Rillenmittellinie der ersten Hauptrille (3) eine Vielzahl von Zickzackspitzen (3t) umfasst, und
die inneren Enden (10i) der äußeren Querrillen (10) in der Reifenumfangsrichtung von den Zickzackspitzen (3t) beabstandet sind.

4. Reifen (1) nach einem der Ansprüche 1 bis 3, wobei die äußeren Querrillen (10) eine erste äußere Querrille (11) umfassen, die sich bis zur äußeren Laufflächenkante (To) erstreckt.

5. Reifen (1) nach einem der Ansprüche 1 bis 4, wobei jede äußere Querrille (10) eine Rillenbreite aufweist, die zur Seite der äußeren Laufflächenkante (To) hin allmählich abnimmt.

6. Reifen (1) nach einem der Ansprüche 1 bis 5, wobei jede äußere Querrille (10) eine Tiefe aufweist, die zur Seite der äußeren Laufflächenkante (To) hin allmählich abnimmt.

7. Reifen (1) nach einem der Ansprüche 1 bis 6, wobei
der Laufflächenabschnitt (2) einen Zwischenlandabschnitt (7) zwischen der ersten Hauptrille (3) und der zweiten Hauptrille (4) umfasst, und
der Zwischenlandabschnitt (7) eine Breite in der Reifenaxialrichtung aufweist, die größer ist als die Summe einer Rillenbreite der ersten Hauptrille (3) und einer Rillenbreite der zweiten Hauptrille (4).

8. Reifen (1) nach einem der Ansprüche 1 bis 7, wobei
der Laufflächenabschnitt (2) einen inneren Landabschnitt (8) zwischen der inneren Laufflächenkante (Ti) und der zweiten Hauptrille (4) umfasst,
der innere Landabschnitt (8) eine Vielzahl von inneren Querrillen (15) umfasst, die sich in der Reifenaxialrichtung erstrecken, und
ein inneres Ende (15i) in der Reifenaxialrichtung jeder inneren Querrille (15) endet, ohne mit der zweiten Hauptrille (4) in Verbindung zu stehen.

9. Reifen (1) nach Anspruch 8, wobei sich jede innere Querrille (15) bis zur inneren Laufflächenkante (Ti) erstreckt.

10. Reifen (1) nach Anspruch 8 oder 9, wobei
eine Rillenmittellinie der zweiten Hauptrille (4) eine Vielzahl von Zickzackspitzen (4t) umfasst, und
Enden (15i) auf der Seite der zweiten Hauptrille (4) der inneren Querrillen (15) in der Reifenumfangsrichtung von den Zickzackspitzen (4t) beabstandet sind.

11. Reifen (1) nach einem der Ansprüche 1 bis 10, wobei eine jede aller Rillen, die an dem Laufflächenabschnitt (2) vorgesehen sind, einen Rillenwandhauptkörper (21), der sich in einer Reifenradialrichtung von einem Rillengrundabschnitt desselben nach außen erstreckt, und einen abgeschrägten Abschnitt (20) umfasst, der mit dem Rillenwandhauptkörper (22) verbunden ist und in einem größeren Winkel relativ zu der Reifenradialrichtung geneigt ist als der Rillenwandhauptkörper (21).

12. Reifen (1) nach einem der Ansprüche 1 bis 11, wobei
der Laufflächenabschnitt (2) einen äußeren Bereich (2A) zwischen der äußeren Laufflächenkante (To) und dem Reifenäquator (C) und einen inneren Bereich (2B) zwischen der inneren Laufflächenkante (Ti) und dem Reifenäquator (C) umfasst, und
ein Landverhältnis des äußeren Bereichs (2A) größer ist als ein Landverhältnis des inneren Bereichs (2B).

13. Reifen (1) mit einem Laufflächenabschnitt (2), der eine bestimmte Montagerichtung an einem Fahrzeug aufweist, wobei
der Laufflächenabschnitt (2) umfasst
eine innere Laufflächenkante (Ti), die an einer Innenseite des Fahrzeugs angeordnet ist, wenn der Reifen (1) an dem Fahrzeug montiert ist,
eine äußere Laufflächenkante (To), die an einer Außenseite des Fahrzeugs angeordnet ist, wenn der Reifen (1) an dem Fahrzeug montiert ist,
eine erste Hauptrille (3), die sich zickzackförmig kontinuierlich in einer Reifenumfangsrichtung erstreckt,
eine zweite Hauptrille (4), die sich zickzackförmig kontinuierlich in der Reifenumfangsrichtung zwischen der inneren Laufflächenkante (Ti) und der ersten Hauptrille (3) erstreckt, und
einen äußeren Landabschnitt (6) zwischen der äußeren Laufflächenkante (To) und der ersten Hauptrille (3),
wobei zumindest ein Teil einer Rillenmittellinie der ersten Hauptrille (3) auf der Seite der inneren Laufflächenkante (Ti) in Bezug auf einen Reifenäquator (C) angeordnet ist,
**dadurch gekennzeichnet, dass**
der äußere Landabschnitt (6) eine Vielzahl von äußeren Querrillen (10) umfasst, die sich in einer Reifenaxialrichtung erstrecken, und keine Hauptrille mit einer Rillenbreite gleich oder größer als 5 mm aufweist, die sich kontinuierlich in der Reifenumfangsrichtung erstreckt, und
ein inneres Ende in der Reifenaxialrichtung jeder äußeren Querrille (10) endet, ohne mit der ersten Hauptrille (3) in Verbindung zu stehen, und
die äußeren Querrillen (10) eine zweite äußere Querrille (12) umfassen, die auf der Seite des Reifenäquators (C) in Bezug auf die äußere Laufflächenkante (To) endet.

## Revendications

1. Pneumatique (1) comprenant une portion formant bande de roulement (2) ayant une direction de montage par conception sur un véhicule, dans lequel
la portion formant bande de roulement (2) inclut
un bord de bande de roulement intérieur (Ti) situé au niveau d'un côté intérieur du véhicule quand le pneumatique (1) est monté sur le véhicule,
un bord de bande de roulement extérieur (To) situé au niveau d'un côté extérieur du véhicule quand le pneumatique (1) est monté sur le véhicule,
une première rainure principale (3) s'étendant en continu dans une direction circonférentielle du pneumatique d'une manière en zigzag,
une seconde rainure principale (4) s'étendant en continu dans la direction circonférentielle du pneumatique d'une manière en zigzag entre le bord de bande de roulement intérieur (Ti) et la première rainure principale (3), et une portion en relief extérieure (6) entre le bord de bande de roulement extérieur (To) et la première rainure principale (3),
au moins une partie d'une ligne centrale de rainure de la première rainure principale (3) est située au niveau du côté du bord de bande de roulement intérieur (Ti) par rapport à un équateur de pneumatique (C),
**caractérisé en ce que**
la portion en relief extérieure (6) comprend une pluralité de rainures latérales extérieures (10) s'étendant dans une direction axiale du pneumatique et n'a aucune rainure s'étendant en continu dans la direction circonférentielle du pneumatique, et
une extrémité intérieure (10i) dans la direction axiale du pneumatique de chaque rainure latérale extérieure (10) se termine sans communiquer avec la première rainure principale (3), et
les rainures latérales extérieures (10) incluent une seconde rainure latérale extérieure (12) se terminant au niveau du côté de l'équateur de pneumatique (C) par rapport au bord de bande de roulement extérieur (To).

2. Pneumatique (1) selon la revendication 1, dans lequel la ligne centrale de rainure de la première rainure principale (3) est située au niveau du côté du bord de bande de roulement intérieur (Ti) par rapport à l'équateur de pneumatique (C).

3. Pneumatique (1) selon la revendication 1 ou 2, dans lequel
la ligne centrale de rainure de la première rainure principale (3) inclut une pluralité de pointes de zigzag (3t), et
les extrémités intérieures (10i) des rainures latérales extérieures (10) sont espacées par rapport aux pics de zigzag (3t) dans la direction circonférentielle du pneumatique.

4. Pneumatique (1) selon l'une quelconque des revendications 1 à 3, dans lequel les rainures latérales extérieures (10) incluent une première rainure latérale extérieure (11) s'étendant jusqu'au bord de bande de roulement extérieur (To).

5. Pneumatique (1) selon l'une quelconque des revendications 1 à 4, dans lequel chaque rainure latérale extérieure (10) a une largeur de rainure qui diminue graduellement vers le côté du bord de bande de roulement extérieur (To).

6. Pneumatique (1) selon l'une quelconque des revendications 1 à 5, dans lequel chaque rainure latérale extérieure (10) a une profondeur qui diminue graduellement vers le côté du bord de bande de roulement extérieur (To).

7. Pneumatique (1) selon l'une quelconque des revendications 1 à 6, dans lequel
la portion formant bande de roulement (2) inclut une portion en relief intermédiaire (7) entre la première rainure principale (3) et la seconde rainure principale (4), et
la portion en relief intermédiaire (7) a une largeur dans la direction axiale du pneumatique plus grande qu'une somme d'une largeur de rainure de la première rainure principale (3) et d'une largeur de rainure de la seconde rainure principale (4).

8. Pneumatique (1) selon l'une quelconque des revendications 1 à 7, dans lequel
la portion formant bande de roulement (2) inclut une portion en relief intérieure (8) entre le bord de bande de roulement intérieur (Ti) et la seconde rainure principale (4),
la portion en relief intérieure (8) comprend une pluralité de rainures latérales intérieures (15) s'étendant dans la direction axiale du pneumatique, et
une extrémité intérieure (15i) dans la direction axiale du pneumatique de chaque rainure latérale intérieure (15) se termine sans communiquer avec la seconde rainure principale (4).

9. Pneumatique (1) selon la revendication 8, dans lequel chaque rainure latérale intérieure (15) s'étend jusqu'au bord de bande de roulement intérieur (Ti).

10. Pneumatique (1) selon la revendication 8 ou 9, dans lequel
une ligne centrale de rainure de la seconde rainure principale (4) inclut une pluralité de pointes de zigzag (4t), et
des extrémités (15i) au niveau du côté de la seconde rainure principale (4) des rainures latérales intérieures (15) sont espacées par rapport aux pics de zigzag (4t) dans la direction circonférentielle du pneumatique.

11. Pneumatique (1) selon l'une quelconque des revendications 1 à 10, dans lequel chacune de l'ensemble des rainures prévues sur la portion formant bande de roulement (2) inclut un corps principal de paroi de rainure (21) s'étendant vers l'extérieur dans une direction radiale du pneumatique depuis une portion de fond de rainure (20) de celle-ci, et une portion chanfreinée (22) connectée au corps principal de paroi de rainure (21) et inclinée sous un angle plus grand relativement à la direction radiale du pneumatique que le corps principal de paroi de rainure (21).

12. Pneumatique (1) selon l'une quelconque des revendications 1 à 11, dans lequel
la portion formant bande de roulement (2) inclut une région extérieure (2A) entre le bord de bande de roulement extérieur (To) et l'équateur de pneumatique (C), et une région intérieure (2B) entre le bord de bande de roulement intérieur (Ti) et l'équateur de pneumatique (C), et
un rapport de relief de la région extérieure (2A) est plus grand qu'un rapport de relief de la région intérieure (2B).

13. Pneumatique (1) comprenant une portion formant bande de roulement (2) ayant une direction de montage par conception sur un véhicule, dans lequel
la portion formant bande de roulement (2) inclut
un bord de bande de roulement intérieur (Ti) situé au niveau d'un côté intérieur du véhicule quand le pneumatique (1) est monté sur le véhicule,
un bord de bande de roulement extérieur (To) situé au niveau d'un côté extérieur du véhicule quand le pneumatique (1) est monté sur le véhicule,
une première rainure principale (3) s'étendant en continu dans une direction circonférentielle du pneumatique d'une manière en zigzag,
une seconde rainure principale (4) s'étendant en continu dans la direction circonférentielle du pneumatique d'une manière en zigzag entre le bord de bande de roulement intérieur (Ti) et la première rainure principale (3), et une portion en relief extérieure (6) entre le bord de bande de roulement extérieur (To) et la première rainure principale (3),
au moins une partie d'une ligne centrale de rainure de la première rainure principale (3) est située au niveau du côté du bord de bande de roulement intérieur (Ti) par rapport à un équateur de pneumatique (C),
**caractérisé en ce que**
la portion en relief extérieure (6) comprend une pluralité de rainures latérales extérieures (10) s'étendant dans une direction axiale du pneumatique et n'a aucune rainure principale qui a une largeur de rainure égale ou supérieure à 5 mm et qui s'étend en continu dans la direction circonférentielle du pneumatique, et
une extrémité intérieure dans la direction axiale du pneumatique de chaque rainure latérale extérieure (10) se termine sans communiquer avec la première rainure principale (3), et
les rainures latérales extérieures (10) incluent une seconde rainure latérale extérieure (12) se terminant au niveau du côté de l'équateur de pneumatique (C) par rapport au bord de bande de roulement extérieur (To).
